Europäisches Patentamt

European Patent Office

Office européen des brevets

(19)

(11) Numéro de publication : **0 210 083**
**B1**

(12) **FASCICULE DE BREVET EUROPÉEN**

(45) Date de publication du fascicule du brevet :
02.11.89

(51) Int. Cl.⁴ : **B 23 B 31/16**

(21) Numéro de dépôt : **86401132.5**

(22) Date de dépôt : **28.05.86**

(54) **Système de changement rapide de mors de serrage sur une machine-outil.**

(30) Priorité : **17.07.85 FR 8510958**

(43) Date de publication de la demande :
**28.01.87 Bulletin 87/05**

(45) Mention de la délivrance du brevet :
**02.11.89 Bulletin 89/44**

(84) Etats contractants désignés :
**AT CH DE GB IT LI SE**

(56) Documents cités :
**EP--A-- 0 139 129**
**DE--A-- 2 813 832**
**GB--A-- 1 386 608**
**GB--A-- 1 422 383**

(73) Titulaire : **SANDVIK TOBLER S.A.**
**4, Avenue de la Vieille France**
**F-95380 Louvres (FR)**

(72) Inventeur : **Barbieux, Jacques**
**20, Avenue Beauséjour**
**F-95380 Louvres (FR)**

(74) Mandataire : **Morash, Daniel**
**17, Avenue La Bruyère**
**F-78160 Marly-le-Roi (FR)**

EP 0 210 083 B1

Jouve, 18, rue St-Denis, 75001 Paris, France

## Description

La présente invention concerne un système de porte-mors et de mors pour changement rapide de mors de serrage sur une machine-outil, utilisage notamment pour des usinages répétitifs, selon le préambule de la revendication 1, voir DE-A-2 813 832.

On connaît des systèmes de mors et de porte-mors pour le changement de mors sur une machine-outil comportant au moins un portemors sur lequel le mors est accroché, positionné, bloqué et verrouillé. Toutefois, ces systèmes connus sont compliqués, nécessitant de nombreuses opérations de montage et de démontage pour le montage et le démontage respectivement, et ils sont peu fiables car leur précision de fonctionnement diminue rapidement en raison d'une faible usure de leurs organes constitutifs actifs. Ainsi, le système décrit dans DE-A-2 813 832 (BERG) nécessite l'intervention du piston de commande principal pour le déplacement radial du porte-mors par rapport à une barette pourvu d'un évidement pour permettre successivement le positionnement du mors au moyen d'un premier boulon et le blocage au moyen d'un deuxième boulon.

Le mors est monté sur le porte-mors par des queues d'aronde dont l'angle d'inclinaison est sans importance pour le positionnement et/ou verrouillage du mors.

Les jeux de montage ne sont donc pas éliminés. En outre le système (BERG) d'accrochage est reversible ; d'où le risque de décollage des surfaces.

La vitesse de montage et/ou démontage du mors est donc comparativement faible et la précision et la sécurité de fonctionnement sont médiocres. La réalisation est compliquée et nécessite l'intervention successive de nombreuses pièces.

La présente invention a pour objet de pallier à ces inconvénients. En effet, le système de porte-mors et de mors pour le changement rapide de mors de serrage sur une machine-outil conforme à la présente invention est caractérisé en ce que ledit premier angle ($\alpha$) et ledit deuxième angle ($\beta$) étant situés dans le même quadrant limité par la face verticale d'appui et un plan horizontal perpendiculaire à ladite face verticale d'appui, ledit premier angle ($\alpha$) étant plus grand que ledit deuxième angle ($\beta$).

Ledit angle ($\alpha$) est 1,4 à 2 fois l'angle ($\beta$) et la différence entre les angles ($\alpha$)-($\beta$) = 7° à 10°, par exemple. La grandeur de l'angle ($\alpha$) est, par exemple, de 15° à 30° et celle de l'angle ($\beta$) de 7° à 20°.

Lesdits moyens dudit ensemble permettant le déblocage et le déverrouillage dudit mors comprennent un poussoir dont une extrémité comportant au moins une face inclinée peut être réalisée sous forme d'une tête ou d'un embout et dont l'autre extrémité permet de loger un moyen élastique réglable, à l'encontre duquel ledit poussoir peut être repoussé dans un alésage pratiqué, directement ou indirectement, dans ladite base dudit élément du porte-mors, lors de l'opération de déblocage et de déverrouillage dudit mors jusqu'à ce que la face de ladite extrémité soit au même niveau ou en dessous de la face supérieure.

Un alésage est prévu dans le mors permettant l'accès à l'extrémité située du côté du mors dudit poussoir pour l'opération de déblocage et de déverrouillage.

Les moyens d'entraînement sont réalisés sous forme de rainures disposées de part et d'autre du mors, sous forme d'un clavetage central entre le mors et le porte-mors, ou sous forme de poussoir qui assure seul l'entraînement pour le mors lorsque le couple d'entraînement est faible.

Enfin, le mors comporte un talon qui, lors du blocage et du verrouillage du mors sur le porte-mors est logé dans un évidement correspondant dans la base de l'élément du porte-mors.

D'autres avantages et caractéristiques ressortiront du texte suivant et des figures y afférentes, données à titre d'exemples uniquement.

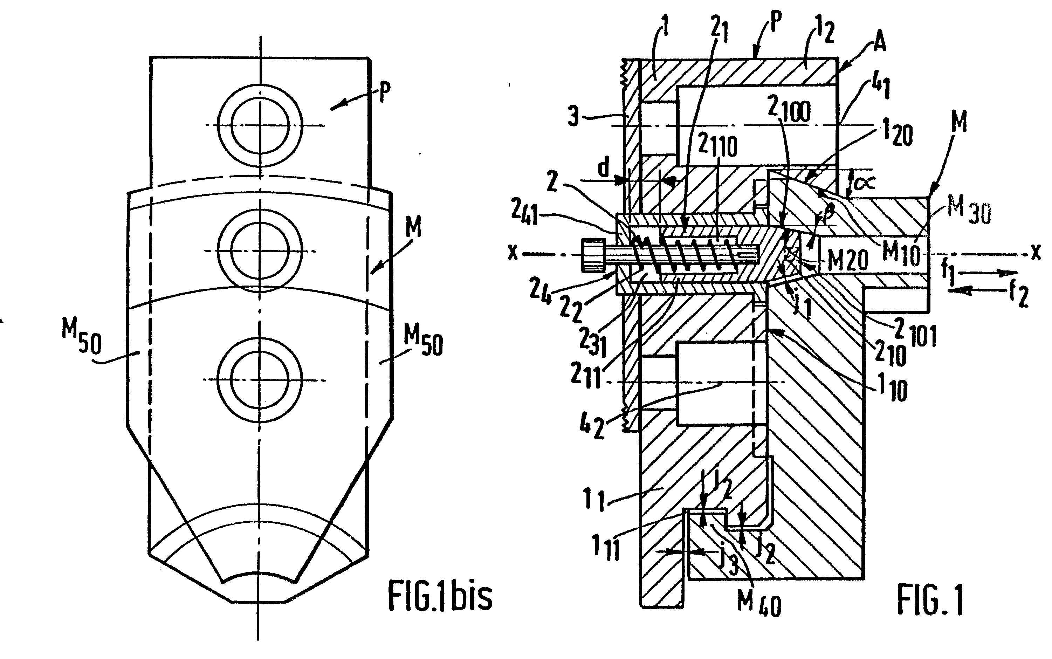

La figure 1 montre, de façon schématique, à titre d'exemple, en coupe, un porte-mors et un mors en position de blocage et de verrouillage, et

La figure 1b montre une vue d'en haut sur l'ensemble montré dans la figure 1.

Comme c'est montré dans les figures, le porte-mors (P) comporte un élément-bloquant (1), un ensemble (2) pour le maintien du mors (M) en position de blocage et de verrouillage, une zone (3) dentée, par exemple sur la face inférieure de l'élément (1) pour le maintien en position du porte-mors sur le mandrin (non montré dans les dessins) ; le porte-mors (P) est monté sur le mandrin par des vis ($4_1$, $4_2$).

L'élément (1) comporte une base ($1_1$) et une partie d'appui ($1_2$) pour le mors (M). Cette partie d'appui ($1_2$) est délimitée du côté du mors (M) par une face d'appui ($1_{20}$) inclinée d'un angle ($\alpha$) avec un plan horizontal perpendiculaire au plan vertical à la face ($1_{10}$) de ladite base ($1_1$).

L'ensemble (2) est constitué par une chemise cylindrique ($2_4$) montée de façon à traverser la base ($1_1$) et la plaque (3) ; l'une des extrémités de ladite chemise ($2_4$) (à gauche sur le dessin) est fermée au moyen d'un couvercle ($2_{41}$), un fond ou similaire. Avantageusement, la chemise ($2_4$) et le couvercle ($2_{41}$) (au fond) sont réalisés sous forme d'une seule pièce. Une ouverture est pratiquée dans le centre du couvercle ou fond ($2_{41}$) pour permettre le passage d'une vis ($2_3$) de réglage d'un moyen élastique, par exemple un ressort ($2_2$) hélicoïdal. Une distance (a) est prévue entre la tête de ladite vis ($2_3$) et la face extérieure du fond ($2_{41}$) comme réserve de compensation du blocage.

D'autres moyens élastiques réglables peuvent être utilisés sans pour autant sortir du cadre de l'invention. Le ressort ($2_2$) s'appuie, d'une part, sur la face intérieure du fond ($2_{41}$) et, d'autre part, sur la face intérieure d'un alésage ($2_{110}$) pratiqué dans une partie externe ($2_{11}$) d'un pous-

soir $(2_1)$ qui peut se déplacer sur une distance (d) selon l'axe x-x dans ladite chemise $(2_4)$ soit dans le sens de la flèche $f_1$ par l'action dudit moyen élastique $(2_2)$, soit dans le sens de la flèche $f_2$ à l'encontre dudit moyen élastique $(2_2)$. Il est dans le cadre de l'invention de remplacer ladite chemise par un simple alésage pratiqué dans la base $(1_1)$ et pourvu d'un couvercle au fond approprié. L'autre extrémité $(2_{10})$ du poussoir $(2_1)$ a au moins une face inclinée d'un angle $(\beta)$ avec un plan horizontal perpendiculaire au plan vertical à ladite face $(1_{10})$ de la base $(1_1)$. Dans l'exemple montré dans les figures, cette extrémité $(2_{10})$ est conique. Elle peut être pyramidale ou avoir la forme générale d'un prisme ayant une seule face inclinée, sans pour autant sortir du cadre de l'invention. La face $(2_{101})$ de l'extrémité $(2_{10})$ du poussoir $(2_1)$ comporte des évidements ou ouvertures pour permettre l'action d'un outil sur le poussoir $(2_1)$.

Les deux angles $(\alpha)$ et $(\beta)$ sont ouverts dans le même sens, l'angle $(\alpha)$ est toujours plus grand que l'angle $(\beta)$. La demanderesse a pu constater qu'il est particulièrement avantageux, si $\alpha = (1,4$ à $2)$ $\beta$ et que la différence entre $(\alpha)$ et $(\beta)$ est de 7° à 10°. L'angle $(\alpha)$ peut varier entre 15° à 30°, et l'angle $(\beta)$ peut varier entre 7° et 20°. Dans l'exemple montré, $\alpha = 20°$ environ et $\beta = 12°$ environ.

Le mors (M) comporte à l'une de ses extrémités une face inclinée $(M_{10})$, l'angle d'inclinaison étant égal à l'angle $(\alpha)$ d'inclinaison de la face $(1_{20})$ de la partie d'appui $(1_2)$ de l'élément bloquant (1). L'autre extrémité du mors (M) comporte un talon $(M_{40})$ qui est logé dans un évidement $(1_{11})$ pratiqué dans la base $(1_1)$ de l'élément (1). A l'endroit du poussoir $(2_1)$, dans la face du mors (M), qui repose sur la face $(1_{10})$ de la base (1) en position de blocage et de verrouillage, une ouverture est pratiquée dont au moins une face $(M_{20})$ est inclinée d'un angle égal à l'angle $(\beta)$ de la face inclinée $(2_{100})$ de l'extrémité $(2_{10})$ du poussoir $(2_1)$. Cette ouverture est prolongée par un alésage $(M_{30})$ destiné à permettre l'accès d'un outil pour agir sur la face $(2_{101})$ de l'extrémité $(2_{10})$ du poussoir $(2_1)$. Les angles d'inclinaison des faces $(M_{10})$ et $(M_{20})$ sont ouverts dans le même sens. Dans l'exemple montré l'ouverture pratiquée dans le mors (M) est conique. Elle peut, toutefois, avoir toute autre forme sans pour autant sortir du cadre de l'invention à condition que la face $(M_{20})$ ait la même inclinaison que la face $(2_{100})$ du poussoir $(2_1)$. De même, dans les figures, la face d'appui $(1_{20})$ du porte-outil (P) et la face correspondante $(M_{10})$ du mors (M) sont circulaires, ces faces $(1_{20})$ et $(M_{10})$ peuvent être planes ou avoir, en général, toute configuration désirée sans pour autant sortir du cadre de l'invention.

Le fonctionnement du système conforme à l'invention est le suivant : en position de blocage et de verrouillage automatique (montrée dans les figures), le mors (M) repose sur la face $(1_{10})$ du porte-outil (P). Les faces inclinées $(M_{10})$ et $(M_{20})$ du mors (M) sont en contact intime avec la face inclinée $(1_{20})$ de l'élément bloquant (1) d'une part, et la face inclinée $(2_{100})$ de l'extrémité $(2_{10})$ du poussoir $(2_1)$ sous l'action du moyen élastique $(2_2)$ d'autre part. La différence de grandeur entre les angles $(\alpha)$ et $(\beta)$ assure un appui parfait de la face $(M_{10})$ du mors (M) contre la face d'appui $(1_{20})$ du porte-mors (P) et le blocage et le verrouillage en position de fonctionnement par la coopération des faces $(M_{20})$ du mors (M) et $(2_{100})$ de l'extrémité $(2_{10})$ du poussoir $(2_1)$. L'expérience a montré qu'il est pratiquement impossible d'enlever le mors (M) sans avoir effectué, préalablement, l'opération de déblocage et de déverrouillage. Dans l'exemple montré, l'extrémité $(2_{10})$ étant conique, le contact entre les faces $(M_{10})$ et $(2_{100})$ est limité à une zone extrêmement étroite pouvant être une simple ligne de contact. Il subsiste alors un jeu $(j_1)$ dont la grandeur maximale est atteinte à l'endroit opposé à ladite zone de contact. L'entraînement du mors est assuré par des rainures $(M_{50})$ disposées sur chacun des côtés du mors (M) et coopérant, de façon connue en soi, avec le porte-mors (P). Lorsque le couple d'entraînement est faible, on peut se contenter du poussoir $(2_1)$ seulement. Un talon $(M_{40})$ est prévu à l'extrémité intérieure du mors (M) ; il est logé, lors du fonctionnement, dans un évidement $(1_{11})$ de la base $(1_1)$ du porte-mors (P) ; seulement l'une de ses faces est en contact avec une seule face de l'évidement $(1_{11})$ tandis que des jeux $(j_2)$ et $(j_3)$ subsistent entre les autres faces dudit talon $(M_{40})$ et de l'évidement $(1_{11})$. Cette disposition permet d'agir à l'encontre du basculement du mors (M) et ainsi éviter son usure prématurée.

Pour le déblocage et le déverrouillage, un outil (non montré dans les figures) est introduit, manuellement ou automatiquement, par l'alésage $(M_{30})$ ; cet outil appuie sur la face $(2_{101})$ du poussoir $(2_1)$ et repousse celui-ci à l'encontre du moyen élastique $(2_2)$ jusqu'à ce que ladite face $(2_{101})$ soit au niveau de la face $(1_{10})$ de la base $(1_1)$ du porte-mors (P) ou en dessous de ce niveau. Le mors (M) est alors libre et peut être enlevé manuellement ou mécaniquement au moyen de pinces ou équivalent qui font prise dans une (ou plusieurs) gorge(s) disposée(s) sur les côtés du mors (M).

Pour le montage du mors (M), il suffit d'introduire le mors (M) sur le porte-mors (P) de façon à ce que la face $(M_{10})$ inclinée engage la face $(1_{20})$ inclinée correspondante du porte-mors, et appuyer sur le mors jusqu'à ce que le poussoir $(2_1)$ soit engagé dans l'ouverture correspondante du mors ; le poussoir pouvant se déplacer selon l'axe x-x, d'abord à l'encontre du moyen élastique $(2_2)$ dans le sens de la flèche $f_2$, et par la suite, pour le verrouillage, dans le sens de la flèche $f_1$ sous l'action dudit moyen élastique $(2_2)$. Bien entendu, plusieurs mors (en général au moins trois mors) étant utilisés pour le maintien d'une pièce, lors de l'usinage, les opérations de déblocage et de déverrouillage ou de blocage et de verrouillage peuvent être effectuées soit successivement, soit simultanément.

Le système selon l'invention permet une rapidité considérable de l'opération du démontage et du remontage des mors, et une très grande répétitivité de l'opération avec une usure extrêmement lente et faible. Ainsi, dans le cas où l'outil de déblocage et de déverrouillage est manipulé manuellement, le temps de démontage des mors est de l'ordre de 6 secondes et le temps de remontage des mors (et de la pièce à usiner) est de l'ordre de 10 secondes environ.

La précision de fonctionnement, après de nombreuses opérations, n'est jamais inférieure au 1/100 mm (en fonction des dimensions de la pièce à usiner) en concentricité et voile de la pièce à usiner.

De nombreuses modifications et améliorations peuvent être apportées au système conforme à l'invention sans pour autant sortir du cadre de l'invention. Ainsi peut-on utiliser plusieurs poussoirs par mors si cela s'avère nécessaire.

Le même système légèrement modifié peut être utilisé sur des machines-outils telles que raboteuses, shaping, etc. Le système de verrouillage autobloquant peut enfin être utilisé dans des domaines techniques autre que la machine-outil et l'usinage.

**Revendications**

1. Système de porte-mors et de mors pour le changement rapide de mors de serrage sur une machine-outil comportant des moyens de verrouillage autobloquants des mors (M) sur le porte-mors (P) ayant une base $(1_1)$ sur une face $(1_{10})$ de laquelle repose ledit mors (M) en position de blocage et une partie $(1_2)$ d'appui pour le mors (M), la face d'appui $(1_{20})$ de ladite partie d'appui $(1_2)$ étant inclinée d'un premier angle ($\alpha$) avec un plan horizontal perpendiculaire au plan vertical à ladite face $(1_{10})$ de ladite base $(1_1)$ pour coopérer en position de blocage, avec une face d'appui $(M_{10})$ correspondante du mors (M) d'une part, et, d'autre part, par au moins un ensemble (2) pour le maintien dudit mors en position de blocage, l'une des extrémités $(2_{10})$ d'un organe mobile $(2_1)$ dudit ensemble (2) ayant au moins une face $(2_{100})$ inclinée d'un deuxième angle ($\beta$) avec un plan horizontal perpendiculaire au plan vertical à ladite face $(1_{10})$ de ladite base $(1_1)$ pour coopérer, en position de blocage, avec une face d'appui $(M_{20})$ correspondante du mors (M), lesdits premier angle ($\alpha$) et deuxième angle ($\beta$) étant ouverts dans le même sens, ledit ensemble comprenant, en outre, des moyens $(2_1, 2_2)$ permettant le déblocage et le déverrouillage dudit mors (M), caractérisé en ce que ledit premier angle ($\alpha$) et ledit deuxième angle ($\beta$) sont situés dans le même quadrant limité par la face verticale d'appui $(1_{10})$ et un plan horizontal perpendiculaire à ladite face verticale d'appui, et ledit premier angle ($\alpha$) est plus grand que ledit deuxième angle ($\beta$).

2. Système selon la revendication 1, caractérisé en ce que ledit premier angle ($\alpha$) est 1,4 à 2 fois, le deuxième angle ($\beta$) et que la différence entre les angles $(\alpha)-(\beta) = 7°$ à 10°, par exemple.

3. Système selon l'une des revendications 1 ou 2, caractérisé en ce que la grandeur du premier angle ($\alpha$) est, par exemple, de 15° à 30°, et celle du deuxième angle ($\beta$) de 7° à 20°.

4. Système selon l'une des revendications précédentes, caractérisé en ce que lesdits moyens $(2_1, 2_2)$ dudit ensemble (2) permettant le déblocage et le déverrouillage dudit mors (M) comprennent un poussoir $(2_1)$ dont une extrémité $(2_{10})$ comportant au moins une face inclinée peut être réalisée sous forme d'une tête ou d'un embout et dont l'autre extrémité $(2_{11})$ permet de loger un moyen élastique réglable $(2_2)$, à l'encontre duquel ledit poussoir $(2_1)$ peut être repoussé dans un alésage $(2_{31})$ pratiqué, directement ou indirectement, dans ladite base $(1_1)$ dudit élément (1) du porte-mors (P), lors de l'opération du déblocage et de déverrouillage dudit mors (M) jusqu'à ce que la face $(2_{101})$ de ladite extrémité $(2_{10})$ soit au même niveau ou en dessous de la face supérieure $(1_{10})$.

5. Système selon l'une des revendications précédentes, caractérisé en ce qu'un alésage $(M_{30})$ est prévu dans le mors (M) permettant l'accès à l'extrémité $(2_{10})$ située du côté du mors dudit poussoir $(2_1)$ pour l'opération de déblocage et de déverrouillage.

6. Système selon la revendication 5, caractérisé en ce que les moyens d'entraînement sont réalisés sous forme de rainures $(M_{50})$ disposées de part et d'autre du mors, sous forme d'un clavetage central entre le mors et le porte-mors, ou sous forme de poussoir $(2_1)$ qui assure seul l'entraînement pour le mors lorsque le couple d'entraînement est faible.

7. Système selon l'une des revendications précédentes, caractérisé en ce que ce mors (M) comporte un talon $(M_{40})$ qui, lors du blocage et du verrouillage du mors (M) sur le porte-mors (P) est logé dans un évidement $(1_{11})$ correspondant dans la base $(1_1)$ de l'élément (1) du porte-mors.

**Claims**

1. Jaw-holder and jaw system for the quick change of clamping jaws on a machine-tool, comprising means for the self blocking locking of the jaws (M) on the jaw-holder (P) having a base $(1_1)$ on a face $(1_{10})$ of which the jaw (M) rests in the blocked position and a bearing portion $(1_2)$ for the jaw (M), the bearing face $(1_{20})$ of said bearing portion $(1_2)$ being slanted by a first angle ($\alpha$) with a horizontal plane perpendicular to the plane vertical to said face $(1_{10})$ of said base $(1_1)$ for cooperating in the blocked position with a corresponding bearing face $(M_{10})$ of the jaw (M) on the one hand and, on the other, by at least one assembly 2) for holding said jaw (M) in the blocked position, one of the ends $(2_{10})$ of a mobile member $(2_1)$ of said assembly (2) having at least one face $(2_{100})$ inclined by a second angle ($\beta$) with a jaw-holder P plane perpendicular to the plane vertical to said face $(1_{10})$ of said base $(1_1)$ for cooperating, in the blocked position with a corresponding bearing face $(M_{20})$ of the haw (M), said first (c) and second (G) angles being open in the same direction, said assembly further comprising means $(2_1, 2_2)$ for unblocking and unlocking said jaw (M), characterized in that said first angle ($\alpha$) and said second angle ($\beta$) are situated in the same quadrant limited by the vertical bearing face $(1_{10})$ and a horizontal plane perpendicular to said vertical bearing face, and said first angle ($\alpha$) is greater than said second angle ($\beta$).

2. System according to claim 1, characterized in that said first angle ($\alpha$) is 1.4 to 2 times the second angle $\beta$ and that the difference between the angle $\alpha - \beta = 7$ to 10° for example.

3. System according to one of claims 1 or 2, characterized in that size of the first angle ($\alpha$) is, for example, 15 to 30° and that of the second angle ($\beta$) from 7 to 20°.

4. System according to one of the preceding claims, characterized in that said means $(1_1, 2_2)$ of said assembly (2) for unblocking and unlocking said jaw (M) comprise a pusher $(2_1)$ one end $(2_{10})$ of which having at least one inclined face may be in the form of a head or an end-piece and the other end $(2_{11})$ of which makes it possible to house an adjustable resilient means $(2_2)$, against which said pusher $(2_1)$ may be pushed back into a bore $(2_{31})$ formed, directly or indirectly, in said base $(1_1)$ of said element (1) of the haw-holder (P), during the operation for unblocking and unlocking said jaw (M) until the face $(2_{101})$ of said $(2_{10})$ end is at the same level as or below the upper face $(1_{10})$.

5. System according to one of the preceding claims, characterized in that a bore $(M_{30})$ is provided in the jaw (M) giving access to the end $(2_{10})$ situated on the jaw side of said pusher $(2_1)$ for the unblocking and unlocking operation.

6. System according to claim 5, characterized in that the drive means are in the form of grooves $(M_{50})$ disposed on each side of the jaw, in the form of a central keyway between the jaw and the jaw-holder, or in the form of $(2_1)$ which alone provides the drive for the jaw when the drive torque is low.

7. System according to one of the preceding claims, characterized in that the jaw (M) comprises a heel $(M_{40})$ which, during blocking and locking of the jaw (M) on the jaw-holder (P), is housed in a corresponding recess $(1_{11})$ in the base $(1_1)$ of the element (1) of the jaw-holder.

## Patentansprüche

1. Backenträger- und Backensystem zum Schnellwechsel von Spannbacken an einer Werkzeugmaschine mit selbstblockierenden Verriegelungseinrichtungen der Backen (M) auf dem Backenträger (P) mit einer Basis $(1_1)$, auf deren einer Fläche $(1_{10})$ diese Backe (M) in Blockierstellung ruht und einem Stützteil $(1_2)$ für die Backe (M), wobei die Stützfläche $(1_{20})$ dieses Stützteils $(1_2)$ um einen ersten Winkel ($\alpha$) zu einer Horizontalebene senkrecht zur Vertikalebene zu dieser Fläche $(1_{10})$ der Basis $(1_1)$ geneigt ist, um in Blockierstellung mit einer entsprechenden Stützfläche $(M_{10})$ der Backe (M) einerseits und andererseits über wenigstens eine Anordnung (2) zusammenzuwirken, um diese Backe in Blockierstellung zu halten, wobei eines der Enden $(2_{10})$ eines beweglichen Organs $(2_1)$ dieser Anordnung (2) wenigstens eine um einen zweiten Winkel ($\beta$) zu einer horizontalen Ebene geneigte Fläche $(2_{100})$ aufweist, die senkrecht zur Vertikalebene zu dieser Fläche $(1_{10})$ der Basis $(1_1)$ steht, um in Blockierstellung mit einer entsprechenden Stützfläche $(M_{20})$ der Backe (M) zusammenzuwirken, wobei diese ersten ($\alpha$) und zweiten ($\beta$) Winkel gleichsinnig offen sind und die Anordnung in übrigen Einrichtungen $(2_1, 2_2)$ umfaßt, die die Aufhebung der Blockierung sowie das Entriegeln dieser Backe (M) ermöglicht, dadurch gekennzeichnet, daß dieser erste Winkel ($\alpha$) und dieser zweite Winkel ($\beta$) im gleichen Quandranten sich befinden, der durch die vertikale Stützfläche $(1_{10})$ und eine Horizontalebene senkrecht zu dieser vertikalen Stützfläche begrenzt ist, und dieser erste Winkel ($\alpha$) größer als dieser zweite Winkel ($\beta$) ist.

2. System nach Anspruch 1, dadurch gekennzeichnet, daß dieser erste Winkel ($\alpha$) gleich dem 1,4 bis 2-fachen des Winkels ($\beta$) ist, und daß die Differenz zwischen diesen Winkeln ($\alpha$)-($\beta$) gleich 7° bis 10° beispielsweise beträgt.

3. System nach Anspruch 1 oder 2, dadurch gekennzeichnet, daß die Größe des ersten Winkels ($\alpha$) beispielsweise 15 bis 30° und die des zweiten Winkels ($\beta$) 7° bis 20° beträgt.

4. System nach einem der vorhergehenden Ansprüche, dadurch gekennzeichnet, daß diese Einrichtungen $(2_1, 2_2)$ dieser Anordnung (2), die das Aufheben der Blockierung sowie die Entriegelung dieser Backe (M) ermöglicht, einen Stößel $(2_1)$ umfassen, von dem ein Ende $(2_{10})$ mit wenigstens einer geneigten Fläche in Form eines Kopfes oder Ansatzes ausführbar ist und dessen anderes Ende $(2_{11})$ es ermöglicht, eine einstellbare elastische Einrichtung $(2_2)$ zu lagern, der entgegen dieser Stößel $(2_1)$ in einer Bohrung $(2_{31})$ zurückgestoßen werden kann, der direkt oder indirekt in dieser Basis $(1_1)$ dieses Elements (1) des Backenträgers (P) bei der Betätigung des Deblockierens und Entriegelns dieser Backe (M) zurückstoßbar ist, bis die Fläche $(2_{101})$ dieses Endes $(2_{10})$ sich auf dem gleichen Niveau oder unterhalb der oberen Fläche $(1_{10})$ befindet.

5. System nach einem der vorhergehenden Ansprüche, dadurch gekennzeichnet, daß eine Bohrung $(M_{30})$ in der Backe (M) vorgesehen ist, die den Zugang zum Ende $(2_{10})$, das auf der Seite der Backe dieses Stößels $(2_1)$ Betätigung von Deblockierung und Entriegelung angeordnet ist, ermöglicht.

6. System nach Anspruch 5, dadurch gekennzeichnet, daß die Mitnehmereinrichtungen in Form von Nuten $(M_{50})$ ausgeführt sind, die zu beiden Seiten der Backe in Form einer mittigen Verkeilung zwischen den Backen und dem Backenträger oder in Stößelform $(2_1)$ angeordnet sind, der allein für Mitnahme bzw. Antrieb für die Backe, wenn das Antriebsmoment gering ist, sorgt.

7. System nach einem der vorhergehenden Ansprüche, dadurch gekennzeichnet, daß die Backe (M) einen Absatz ($M_{40}$) aufweist, der beim Blockieren und Verriegeln der Backe (M) auf dem Backenträger (P) in einer entsprechenden Ausnehmung ($1_{11}$) in der Basis ($1_1$) des Elementes (1) des Backenträgers gelagert ist.

FIG.1

FIG.1bis